# FASCICULE DE BREVET EUROPEEN

(11) **EP 1 016 622 B1**
(45) Date de publication et mention de la délivrance du brevet: **12.03.2003**
(21) Numéro de dépôt: 99403320.7
(22) Date de dépôt: 30.12.1999
(51) Int. Cl.: C01B 15/023

(54) **Préparation de peroxyde d'hydrogène par un procédé cyclique à l'anthraquinone amélioré**
Herstellung von Wasserstoffperoxid nach einem zyklischen Anthrachinonverfahren
Preparation of hydrogen peroxide by means of a cyclic anthraquinone process

(30) Priorité: 31.12.1998 FR 9816719
(43) Date de publication de la demande: 05.07.2000
(73) Titulaire: Technip France, 92400 Courbevoie (FR)
(72) Inventeur: Dietrich, Marc, 78610 Auffargis (FR); Hernandez, José Luis, 22600 Sabinanigo (ES)
(74) Mandataire: Lanceplaine, Jean-Claude

(56) Documents cités:
- EP-A- 0 078 780
- WO-A-95/28350
- DE-C- 3 633 672

## Description

La présente invention a pour objet un procédé de préparation de peroxyde d'hydrogène (H₂O₂). Elle propose plus précisément un perfectionnement au procédé connu à l'anthraquinone. Ce procédé à l'anthraquinone, procédé cyclique, ou procédé d'auto-oxydation d'un dérivé de l'anthraquinone ou d'un mélange de tels dérivés est, à ce jour, le procédé le plus utilisé pour la production de peroxyde d'hydrogène. Le(s)dit(s) dérivé(s) de l'anthraquinone intervien(nen)t dissous dans un mélange complexe de solvants organiques, tel qu'un hydrocarbure aromatique mélangé à un ester ou un alcool. Cette solution est appelée la solution de travail ("working solution"). Cette solution de travail est tout d'abord hydrogénée catalytiquement, ce qui provoque la conversion des quinones en hydroquinones. Elle est ensuite oxydée par mise en contact avec un gaz oxydant, généralement de l'air ou de l'air enrichi en oxygène. Lors de cette oxydation, les hydroquinones sont oxydées, à nouveau, en quinones, avec formation simultanée de peroxyde. Ledit peroxyde d'hydrogène est récupéré, généralement par extraction à l'eau déminéralisée et la solution de travail subit un traitement de régénération avant d'être à nouveau utilisée.

Le perfectionnement selon l'invention se situe au niveau dudit traitement de régénération.

Ledit procédé connu à l'anthraquinone repose essentiellement sur l'intervention de ladite solution de travail, solution organique qui doit répondre à un cahier des charges comportant de nombreux points. Notamment :
a) pour obtenir un niveau élevé d'hydrogénation, et donc des concentrations élevées en peroxyde d'hydrogène (H₂O₂), ladite solution de travail doit présenter un pouvoir solvant aussi élevé que possible pour les quinones et après hydrogénation, pour les hydroquinones ;
b) ladite solution de travail, autant que faire se peut, ne doit pas s'altérer, ne doit pas subir de modification irréversible, ni au cours de son hydrogénation, ni au cours de son oxydation ;
c) ladite solution de travail doit être résistante au peroxyde d'hydrogène généré en son sein ;
d) ladite solution de travail doit résister à l'eau et la solubilité de ladite eau en son sein doit être faible mais non nulle ;
e) les produits de dégradation, susceptibles d'être formés, doivent, soit être faciles à transformer à nouveau en produits utiles à la production de peroxyde d'hydrogène (par régénération), soit pouvoir être éliminés, soit pouvoir s'accumuler sans être gênants ;
f) enfin, pour permettre l'extraction à l'eau (déminéralisée) du peroxyde d'hydrogène généré, la densité de ladite solution de travail doit être suffisamment différente (en fait, plus faible) de celle de l'eau et des solutions aqueuses de peroxyde d'hydrogène.

Le choix des composés organiques, entrant dans la composition des solutions de travail utilisées à ce jour, vise à répondre aux points a à c et f ci-dessus du cahier des charges. Par ailleurs, en référence aux points d et e, l'étape de régénération de la solution de travail doit être mise en oeuvre dans des conditions opératoires particulières.

Ladite étape de régénération a pour objectifs :
α) l'élimination, de la solution de travail, en aval de l'extraction, d'au moins une partie de l'eau solubilisée en son sein ; eau prélevée sur l'eau (déminéralisée) utilisée pour la mise en oeuvre de ladite extraction (du peroxyde d'hydrogène) ;
β) la destruction du peroxyde d'hydrogène restant dans ladite solution de travail en aval de l'extraction, peroxyde d'hydrogène non extrait lors de ladite extraction ;
γ) la neutralisation des acides organiques formés dans les étapes précédentes d'oxydation et d'hydrogénation ainsi que celle de l'acide phosphorique, classiquement ajouté entre l'oxydation et l'extraction, entraîné en aval de ladite extraction ;
δ) la régénération des produits de dégradation des anthraquinones, contenus dans ladite solution de travail et/ou leur élimination de ladite solution.

L'utilisation, d'une solution de carbonate de potassium (K₂CO₃), pour laver ladite solution de travail, a été développée dès l'origine du procédé de fabrication du peroxyde d'hydrogène par la voie anthraquinone, particulièrement en Allemagne, avant et pendant la seconde guerre mondiale. D'autres procédés ont également été développés, notamment par les sociétés DU PONT, F.M.C., DEGUSSA, ATOCHEM, tels :
- l'élimination de l'eau par évaporation sous vide ou stripage (ou stripping) à l'aide d'un gaz ;
- l'élimination de l'eau par refroidissement et coalescence ;
- le traitement de la solution de travail à l'aide d'une solution de soude
- le passage de la solution de travail à travers divers lits de produits absorbants ;
- l'extraction des impuretés, à l'aide de solvants.

Plus précisément, il a été mis en oeuvre, selon l'art antérieur, notamment par la Demanderesse, au stade pilote, un procédé de régénération de la solution de travail qui comporte les deux étapes successives de traitement ci-après :
- une première étape de mise en contact, de lavage, de ladite solution de travail avec une solution de carbonate de potassium (K₂CO₃), notamment dans une colonne à plateaux. Afin de maintenir constante la concentration en carbonate de la solution de lavage, celle-ci est recirculée dans un évaporateur chauffé à la température où l'eau absorbée de la solution de travail est évaporée. Après refroidissement, la solution de carbonate est renvoyée vers la colonne à plateaux. Une purge continue ou séquentielle, compensée par un ajout de solution fraîche de carbonate de potassium, permet d'éliminer les impuretés organiques extraites de la solution de travail. Dans le cadre de cette première étape, on vise à atteindre les objectifs α, β, γ et δ (en partie : élimination de produits de dégradation) listés ci-dessus ;
- une seconde étape de passage de la solution de travail lavée sur un lit adsorbant d'alumine activée. Dans le cadre de cette seconde étape, on vise à atteindre l'objectif δ présenté ci-dessus, c'est-à-dire la régénération de certains produits de dégradation des anthraquinones et l'élimination de certains autres (que l'on récupère, fixés sur l'alumine).

Cette mise en oeuvre de la régénération de la solution de travail ne donne pas entière satisfaction. L'utilisation du carbonate de potassium pose problème. En effet, l'entraînement continu dudit carbonate de potassium, en aval du lavage, en aval de la régénération, a des conséquences néfastes pour le procédé cyclique à l'anthraquinone. On observe notamment :
- une désactivation rapide du lit d'alumine placé en aval du lavage (généralement de la colonne de lavage), désactivation due à une substitution, par les ions potassium (K⁺), des ions sodium (Na⁺) utilisés pour l'activation de l'alumine ;
- une perte d'activité du catalyseur d'hydrogénation, perte d'activité due, comme démontré par une série d'analyses effectuées au microscope électronique à balayage, à une pollution de la surface des grains de catalyseur par les ions potassium (K⁺) ;
- une consommation importante d'acide - acide phosphorique -, nécessaire à la neutralisation de l'alcalinité du carbonate entraîné dans la solution de travail ;
- une contamination, par les ions potassium (K⁺) du peroxyde d'hydrogène récupéré lors de l'extraction.

Confrontée à ce problème technique - de l'optimisation de la mise en oeuvre de la régénération de la solution de travail - la Demanderesse a essayé plusieurs techniques complémentaires et/ou alternatives. Elle a enfin développé la présente invention.

Elle a tout d'abord décidé de changer, sans succès, le coalesceur placé en sortie de la colonne de lavage (lavage au K₂CO₃). Puis, devant cet échec, elle a envisagé d'introduire une étape supplémentaire pour récupérer les ions potassium entraînés.

Ainsi, une colonne à plateaux supplémentaire a été introduite, en sortie de la colonne de lavage au carbonate, pour laver à contre-courant, avec de l'eau déminéralisée, la solution de travail. Ce lavage supplémentaire permet effectivement de diviser par 10 la teneur en ions potassium entraînés mais, à son issue, il faut à nouveau sécher ladite solution de travail. On précise ici, à toutes fins utiles, que si la teneur en eau de la solution de travail doit être contrôlée, minimisée, c'est tout particulièrement pour protéger le lit d'alumine (intervenant dans l'étape de régénération) et le catalyseur d'hydrogénation (intervenant bien évidemment dans l'étape d'hydrogénation).

Pour mettre en oeuvre ce séchage, une colonne de stripage (ou stripping) à l'aide d'un gaz sec a été testée, avec succès. Toutefois, la mise en oeuvre d'un tel stripage se révèle pénalisante à plusieurs niveaux : investissement, circulation de la solution de travail (nouvelle perte de charge), perte en solvant durant le stripage, consommation énergétique ...

Parallèlement, la Demanderesse a étudié la possibilité de faire intervenir un autre sel, en lieu et place du carbonate de potassium, autre sel qui n'amènerait pas de réactions secondaires susceptibles d'interférer avec le procédé cyclique.

Le radical "NO₃" a été retenu car il est déjà présent dans le procédé sous forme d'acide nitrique ou de nitrate d'ammonium utilisé comme stabilisant du peroxyde d'hydrogène. Ledit nitrate d'ammonium a été testé mais l'ion ammonium (NH₄⁺) entraîne lui aussi, comme l'ion potassium (K⁺), la désactivation de l'alumine.

La Demanderesse a alors testé un autre sel - un autre nitrate - et a obtenu, avec ledit autre sel, des résultats surprenants, très satisfaisants. L'utilisation de cet autre sel, pour la mise en oeuvre du lavage de la solution de travail, dans le cadre de la régénération de ladite solution de travail, dans un procédé cyclique à l'anthraquinone pour la production de peroxyde d'hydrogène, constitue l'objet de la présente invention.

Ladite présente invention a donc pour objet un procédé de préparation de peroxyde d'hydrogène (H₂O₂) selon le procédé cyclique à l'anthraquinone qui, de façon connue en soi, comprend :
- l'hydrogénation catalytique d'au moins un dérivé de l'anthraquinone (généralement un mélange d'anthraquinones et de tétrahydroanthraquinones) dissous dans une solution dite de travail, renfermant au moins un solvant organique polaire et au moins un solvant organique non polaire (ce type de solution est familier à l'homme du métier ; les solvants intervenants sont disponibles dans le commerce ; ce type de solution présente un pouvoir solvant élevé pour les quinones et les hydroquinones) ;
- l'oxydation, dans ladite solution de travail, du(des) dérivé(s) hydrogéné(s) dissous obtenu(s), par de l'oxygène, de l'air, enrichi ou non en oxygène ou tout autre gaz renfermant de l'oxygène (généralement par de l'oxygène ou de l'air) ;
- le soutirage, de ladite solution de travail oxydée, du peroxyde d'hydrogène obtenu, de préférence par extraction avec de l'eau déminéralisée (voir ci-dessus) ;
- la régénération de ladite solution de travail ; ladite régénération comprenant le lavage de ladite solution par une solution aqueuse alcaline saline (on a vu précédemment qu'une telle régénération comprenait, selon l'art antérieur, un lavage avec une solution de carbonate de potassium (K₂CO₃) et un passage sur un lit adsorbant d'alumine activée) ;
- le recyclage de ladite solution de travail régénérée, pour la mise en oeuvre de l'hydrogénation catalytique dudit(desdits) dérivé(s) de l'anthraquinone dissous.

De façon caractéristique, dans le procédé de l'invention, qui s'inscrit dans le cadre général, du procédé connu à l'anthraquinone, rappelé ci-dessus, la solution aqueuse alcaline saline, qui intervient pour le lavage de la solution de travail (dans le cadre de la régénération de ladite solution de travail) est une solution aqueuse alcaline de nitrate de sodium (NaNO₃).

De façon inattendue, ledit nitrate de sodium se substitue très avantageusement au carbonate de potassium. En tout état de cause, il ne s'agit pas exactement d'une simple substitution : NaNO₃ en lieu et place de K₂CO₃. Pour retrouver l'alcalinité des solutions de K₂CO₃, il est nécessaire d'ajuster le pH de la solution de NaNO₃ à une valeur alcaline, généralement comprise entre 10 et 14 [10,14], avantageusement égale à 11. On rappelle ici, à toutes fins utiles, que ce caractère basique de la solution de lavage est notamment requis pour la destruction du peroxyde d'hydrogène non extrait (point β ci-dessus) et pour la neutralisation des acides (point γ ci-dessus). Il est également avantageux pour la mise en oeuvre de l'hydrogénation.

Le pH de la solution de nitrate de sodium est avantageusement ajusté à une valeur alcaline à l'aide de soude. On veille bien évidemment à faire intervenir une base qui n'introduit pas d'ions perturbateurs, ions potassium notamment.

Ainsi, une solution alcaline de nitrate de sodium (NaNO₃) se substitue-t-elle avantageusement selon l'invention à la solution de carbonate de potassium selon l'art antérieur.

D'un point de vue économique, le coût des matières premières, comme les coûts opératoires, sont identiques. Par contre, la baisse de consommation, tant de catalyseur d'hydrogénation que d'alumine activée, représente un gain important dans le prix de revient final du peroxyde d'hydrogène produit. De même, les faibles teneurs en impuretés des solutions de peroxyde d'hydrogène produites selon l'invention, y compris des solutions issues directement de l'extraction, en font des produits de haute valeur commerciale, ne nécessitant aucune épuration complémentaire pour atteindre les caractéristiques usuelles des produits marchands ayant subis un tel traitement. A l'appui de ces affirmations, on présente plus avant dans le présent texte, au niveau de l'exemple comparatif, des résultats d'essais.

La Demanderesse préconise de mettre en oeuvre, selon l'invention, le lavage de la solution de travail avec une solution aqueuse alcaline de nitrate de sodium (NaNO₃) qui renferme de 25 à 50 % en poids de nitrate de sodium. Dans la mesure où elle a avantageusement souhaité pouvoir utiliser les équipements existants et conserver des paramètres opératoires proches de ceux employés avec le carbonate, elle a ajusté la concentration de la solution de nitrate de sodium afin de retrouver une densité équivalente à celle de la solution de carbonate (≈ 1.3). Ainsi, avantageusement, la solution aqueuse alcaline de NaNO₃ qui intervient renferme-t-elle 40 % en poids de NaNO₃.

En référence au paramètre température, il n'y a pas, selon l'invention, de réelle innovation. On préconise que le lavage de la solution de travail, avec la solution aqueuse alcaline de nitrate de sodium (NaNO₃), soit mis en oeuvre à une température comprise entre 20 et 40°C. La Demanderesse a obtenu de très bons résultats en travaillant à 25°C.

Selon une variante particulièrement avantageuse, le lavage de la solution de travail est mis en oeuvre, selon l'invention, avec une solution aqueuse de nitrate de sodium (NaNO₃), à 40 % en poids, qui renferme une quantité efficace de soude (NaOH) pour lui conférer un pH de 11.

Le lavage selon l'invention est mis en oeuvre, de façon classique, pour obtenir un contact maximum entre la solution de travail à laver (à régénérer) et la solution de lavage. Il peut notamment être mis en oeuvre dans une colonne à plateaux ou dans un mélangeur-décanteur. Avantageusement, il est mis en oeuvre dans une colonne à plateaux.

A l'issue dudit lavage, original de par la nature du sel entrant dans la composition de la solution aqueuse alcaline de lavage, la solution de travail est avantageusement, comme selon l'art antérieur, passée sur un lit adsorbant d'alumine activée.

Selon l'invention, la Demanderesse propose donc aussi un traitement de régénération de la solution de travail qui comprend les deux étapes successives de lavage par une solution aqueuse alcaline saline et de passage sur un lit adsorbant d'alumine activée ; ladite solution aqueuse alcaline renfermant, de façon caractéristique, à titre de sel, du nitrate de sodium (NaNO₃).

En référence à l'intervention de ladite solution de lavage originale dans le procédé de l'invention, on peut encore préciser ce qui suit. Le lavage mis en oeuvre l'est avantageusement avec recyclage de ladite solution de lavage, une purge étant prévue sur la boucle de recyclage pour éviter l'accumulation des impuretés extraites. De la même façon, pour compenser ladite purge, on prévoit un ajout de solution fraîche de lavage dans ladite boucle de recyclage. Dans ce contexte, pour maintenir sensiblement constante la concentration en NaNO₃ de ladite solution de lavage (ainsi que pour stabiliser son pH), on élimine, dans ladite boucle de recyclage, l'eau récupérée lors du lavage. Ladite eau - extraite de la solution de travail lavée - est avantageusement éliminée par évaporation.

Par ailleurs, on trouve avantageusement au moins un échangeur de chaleur, pour transférer des frigories de la solution de lavage ayant servie audit lavage (en aval dudit lavage) à la solution de lavage utile à la mise en oeuvre dudit lavage (en amont dudit lavage).

La solution de lavage - originale de par sa nature - peut en fait intervenir, selon l'invention, dans un contexte et avec des moyens, tout à fait similaires à ceux de l'art antérieur (lors de l'intervention de K₂CO₃).

De manière plus générale, le dispositif utile à la mise en oeuvre du procédé de l'invention (procédé de préparation de peroxyde d'hydrogène (H₂O₂)), dispositif qui inclut un dispositif adéquat pour la mise en oeuvre de l'étape de régénération de la solution de travail, n'a *per se* rien d'original.

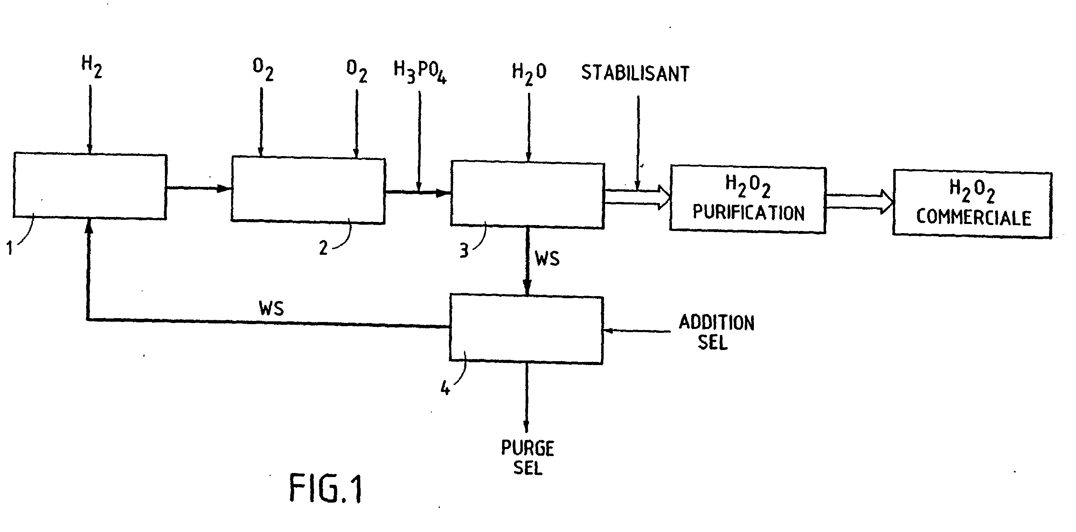

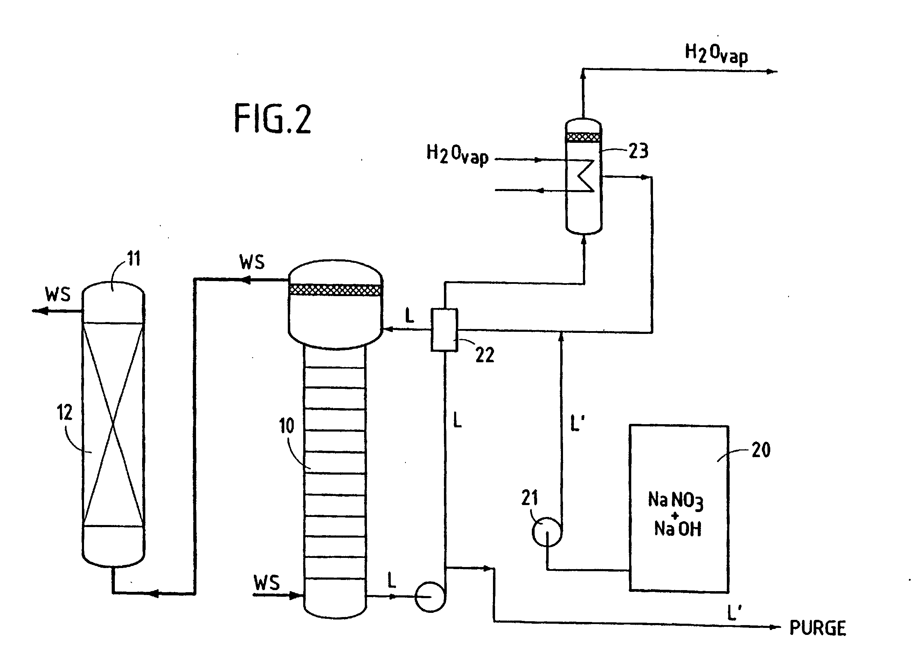

On se propose maintenant d'illustrer ledit procédé de l'invention par les figures 1 et 2 annexées.

La figure 1 est un schéma de principe du procédé de préparation de peroxyde d'hydrogène (H₂O₂) par la voie anthraquinone.

La figure 2 est un schéma de l'étape de régénération de la solution de travail, mise en oeuvre selon une variante avantageuse de l'invention.

Le schéma de principe de ladite figure 1 illustre à la fois l'art antérieur et l'invention présentement revendiquée. Il schématise en fait le procédé cyclique à l'anthraquinone selon lequel une solution de travail WS est successivement :
- hydrogénée en 1,
- oxydée en 2,
- soumise à une extraction liquide/liquide en 3,
- puis régénérée en 4 avant son recyclage à l'hydrogénation 1.

En 3, l'extraction liquide/liquide permet la récupération du peroxyde d'hydrogène formé. Ledit peroxyde d'hydrogène, obtenu en solution aqueuse, est purifié, avant son conditionnement. La purification comprend classiquement une distillation.

La régénération 4 comprend le lavage de la solution de travail WS par une solution aqueuse alcaline saline. On a vu que selon l'art antérieur le sel intervenant est du K₂CO₃ alors que selon l'invention ledit sel est du NaNO₃.

Sur la figure 2, on a illustré avec plus de détail ladite étape de régénération 4 de la solution de travail WS. Ladite solution WS à régénérer est amenée au bas d'une colonne à plateaux perforés 10. Au sein de ladite colonne 10, ladite solution est lavée, par mise en contact, à contre-courant, avec une solution de lavage L. Ladite solution de lavage L circule de haut en bas dans ladite colonne 10. La solution de travail lavée est récupérée en haut de ladite colonne 10. Elle est alors orientée vers une autre colonne 11. Il s'agit d'une colonne d'adsorption qui renferme un lit d'alumine activée 12. Au sortir (en haut) de ladite colonne 11, on récupère la solution de travail régénérée.

La solution de lavage L, intervenant dans la colonne de lavage 10, est une solution aqueuse de NaNO₃ et de soude NaOH. Il est prévu en 20 un réservoir de stockage de ladite solution de lavage fraîche. Une pompe doseuse 21 permet de puiser dans ledit réservoir 20, pour compenser la partie L' de ladite solution L, régulièrement purgée.

On a représenté en 22 un échangeur de chaleur et en 23 un évaporateur chauffé à la vapeur d'eau. Au sein dudit évaporateur 23, on débarrasse la solution L, refroidie en 22, de l'eau qu'elle a prélevée sur la solution de travail dans la colonne de lavage 10. On maintient ainsi sensiblement constante, au sein de la solution de lavage L, la concentration en NaNO₃.

A la considération desdites figures, l'homme du métier aura parfaitement compris d'une part, le contexte de l'invention - le procédé cyclique à l'anthraquinone, en général et son étape de régénération de la solution de travail, en particulier - et d'autre part, la substantifique moelle de ladite invention : l'intervention de NaNO₃ dans la solution aqueuse de lavage de la solution de travail.

Grâce à l'intervention de ce sel, la Demanderesse est en mesure de proposer un nouveau procédé cyclique à l'anthraquinone, particulièrement propre, efficace et économique.

L'intérêt dudit procédé est mis en avant par les chiffres ci-après, fournis dans le cadre d'un exemple comparatif.

Le procédé cyclique à l'anthraquinone a été mis en oeuvre avec une même solution de travail dans les mêmes conditions (d'hydrogénation, d'oxydation, d'extraction, de régénération (régénération = lavage par une solution aqueuse alcaline saline + passage sur un lit adsorbant d'alumine activée)), à l'exception de l'étape de lavage de la régénération mise en oeuvre :
a) selon l'art antérieur (avec K₂CO₃)
b) selon l'invention (avec NaNO₃).

On précise ci-après les caractéristiques des deux solutions de lavage utilisées.

| | K₂CO₃ | NaNO₃ |
|---|---|---|
| Concentration (% en poids) | 30 | 40 |
| Densité | 1,3 | 1,3 |
| pH | 12 | 11 |
| Consommation (kg/t_{H₂O₂}) | 3,9 | 5 |
| Consommation NaOH (kg/t_{H₂O₂}) | 0 | 0,75 |

Les résultats comparatifs obtenus sont indiqués ci-dessous.

| | K₂CO₃ | NaNO₃ |
|---|---|---|
| Eau éliminée de la solution de travail (g/l) | 1,5 | 1,5 |
| Consommation acide phosphorique (kg/t_{H₂O₂}) | 1,8 | 0,4 |
| Consommation catalyseur (kg/t_{H₂O₂}) | 0,5 | 0,1 |
| Concentration "K" dans H₂O₂ 60 % (ppm) | 500 | <5 |
| Concentration "Na" dans H₂O₂ 60 % (ppm) | 50 | 20 |
| Durée de vie du lit d'alumine (semaine) | 1 | 4 |
| Régénération des anthraquinones | faible | importante |

Les résultats montrent, sans qu'il soit besoin de commentaires, tout l'intérêt de l'intervention de NaNO₃ selon l'invention.

## Revendications

1. Procédé de préparation de peroxyde d'hydrogène (H₂O₂) selon le procédé cyclique à l'anthraquinone qui comprend :
- l'hydrogénation catalytique d'au moins un dérivé de l'anthraquinone dissous dans une solution dite de travail (WS), renfermant au moins un solvant organique polaire et au moins un solvant organique non polaire ;
- l'oxydation, dans ladite solution de travail (WS), du(des) dérivé(s) hydrogéné(s) dissous obtenu(s), par de l'oxygène, de l'air, enrichi ou non en oxygène ou tout autre gaz renfermant de l'oxygène ;
- le soutirage, de ladite solution de travail (WS), du peroxyde d'hydrogène (H₂O₂) obtenu, de préférence par extraction avec de l'eau déminéralisée ;
- la régénération de ladite solution de travail (WS) ; ladite régénération comprenant le lavage de ladite solution (WS) par une solution aqueuse alcaline saline (L) ;
- le recyclage de ladite solution de travail (WS) régénérée, pour la mise en oeuvre de l'hydrogénation catalytique dudit(desdits) dérivé(s) de l'anthraquinone dissous ;
**caractérisé en ce que** la solution aqueuse alcaline saline (L), qui intervient pour le lavage de ladite solution de travail (WS), est une solution aqueuse alcaline de nitrate de sodium (NaNO₃).

2. Procédé selon la revendication 1, **caractérisé en ce que** le pH de ladite solution aqueuse alcaline de nitrate de sodium (NaNO₃) est compris entre 10 et 14.

3. Procédé selon l'une des revendications 1 ou 2, **caractérisé en ce que** le pH de ladite solution aqueuse alcaline de nitrate de sodium (NaNO₃) est ajusté à l'aide de soude (NaOH).

4. Procédé selon l'une quelconque des revendications 1 à 3, **caractérisé en ce que** ladite solution aqueuse alcaline de nitrate de sodium (NaNO₃) renferme de 25 à 50 % en poids de nitrate de sodium (NaNO₃).

5. Procédé selon l'une quelconque des revendications 1 à 4, **caractérisé en ce que** ledit lavage de ladite solution de travail (WS), avec la solution aqueuse alcaline de nitrate de sodium (NaNO₃), est mis en oeuvre à une température comprise entre 20 et 40°C.

6. Procédé selon l'une quelconque des revendications 1 à 5, **caractérisé en ce que** ledit lavage de ladite solution de travail (WS) est mis en oeuvre, avec une solution aqueuse de nitrate de sodium (NaNO₃), à 40 % en poids, qui renferme une quantité suffisante de soude (NaOH) pour lui conférer un pH de 11.

7. Procédé selon l'une quelconque des revendications 1 à 6, **caractérisé en ce que** la régénération de ladite solution de travail (WS) comprend, après son lavage avec ladite solution aqueuse alcaline de nitrate de sodium (NaNO₃), son passage sur un lit adsorbant d'alumine activée (12).

8. Procédé selon l'une quelconque des revendications 1 à 7, **caractérisé en ce que** ledit lavage de ladite solution de travail (WS) par ladite solution aqueuse alcaline de nitrate de sodium (NaNO₃) est mis en oeuvre avec recyclage de ladite solution aqueuse alcaline de nitrate de sodium (NaNO₃); une purge étant prévue sur la boucle de recyclage.

9. Procédé selon la revendication 8, **caractérisé en ce que** la concentration en nitrate de sodium (NaNO₃) de la solution aqueuse alcaline saline de lavage (L) est maintenue sensiblement constante, par élimination, dans la boucle de recyclage, de l'eau récupérée lors du lavage ; ladite élimination étant avantageusement mise en oeuvre par évaporation.

10. Procédé selon l'une des revendications 8 ou 9, **caractérisé en ce que**, au niveau d'au moins un échangeur de chaleur (22) disposé dans ladite boucle de recyclage, des frigories sont prélevées sur la solution de lavage ayant servie audit lavage pour refroidir la solution de lavage utile à la mise en oeuvre dudit lavage.

## Claims

1. Method for preparing hydrogen peroxide (H₂O₂) according to the anthraquinone cyclical method which comprises:
the catalytic hydrogenation of at least one derivative of the anthraquinone dissolved in a solution known as a working solution (WS), containing at least one polar organic solvent and at least one non-polar organic solvent;
the oxydation, in said working solution (WS), of the dissolved hydrogen derivative(s) obtained using oxygen, air enriched or not enriched in oxygen or any other gas containing oxygen;
the extraction from said working solution (WS) of the hydrogen peroxide (H₂O₂) obtained, preferably by extraction with demineralised water;
the regeneration of said working solution (WS); said regeneration comprising the washing of said solution (WS) using an alkaline, aqueous saline solution (L);
the recycling of said regenerated working solution (WS) for carrying out the catalytic hydrogenation of said derivative(s) of the dissolved anthraqulnone;
**characterised in that** the alkaline, aqueous saline solution (L), which is introduced for washing said working solution (WS), is an alkaline, aqueous solution of sodium nitrate (NaNO₃).

2. Method according to Claim1, **characterised in that** the pH of said alkaline, aqueous solution of sodium nitrate (NaNO₃) is between 10 and 14.

3. Method according to one of Claims 1 or 2, **characterised in that** the pH of said alkaline, aqueous solution of sodium nitrate (NaNO₃) is adjusted using soda (NaOH).

4. Method according to any one of Claims 1 to 3, **characterised in that** said alkaline, aqueous solution of sodium nitrate (NaNO₃) contains 25 to 50 wt. % sodium nitrate (NaNO₃).

5. Method according to any one of Claims 1 to 4, **characterised in that** said washing of said working solution (WS) with the alkaline, aqueous solution of sodium nitrate (NaNO₃) is carried out at a temperature of between 20 and 40°C.

6. Method according to any one of Claims 1 to 5, **characterised in that** said washing of said working solution (WS) is carried out using an aqueous solution of sodium nitrate (NaNO₃) at 40 wt. % which contains a sufficient quantity of soda (NaOH) to provide a pH of 11 thereto.

7. Method according to any one of Claims 1 to 6, **characterised in that** the regeneration of said working solution (WS) comprises, after being washed with said alkaline, aqueous solution of sodium nitrate (NaNO₃), its passing onto an adsorbent bed of activated alumina (12).

8. Method according to any one of Claims 1 to 7, **characterised in that** said washing of said working solution (WS) using said alkaline, aqueous solution of sodium nitrate (NaNO₃) is carried out along with recycling said alkaline, aqueous solution of sodium nitrate (NaNO₃); purging is provided for in the recycling loop.

9. Method according to Claim 8, **characterised in that** the sodium nitrate (NaNO₃) concentration of the alkaline, aqueous saline washing solution (L) is kept at a substantially constant level by elimination, in the recycling loop, of the water recovered during washing; said elimination being advantageously carried out by evaporation.

10. Method according to one of Claims 8 or 9, **characterised in that**, at one heat exchanger (22) at least arranged in said recycling loop, kilogram calories are drawn out from a washing solution which was used in said washing in order to cool the washing solution useful for carrying out said washing.

## Patentansprüche

1. Verfahren zur Herstellung von Wasserstoffperoxid (H₂O₂) gemäß dem zyklischen Anthrachinonverfahren, umfassend:
- die katalytische Hydrierung von mindestens einem Anthrachinonderivat, das in einer sogenannten Arbeitslösung (WS) gelöst ist, die mindestens ein polares organisches Lösungsmittel und mindestens ein unpolares organisches Lösungsmittel umfasst;
- die Oxidation in der Arbeitslösung (WS) von (einem) erhaltenen gelösten hydrierten Derivat(en) mittels Sauerstoff, Luft, die mit Sauerstoff angereichert oder nicht angereichert ist, oder einem anderen Sauerstoff umfassenden Gas;
- das Abziehen des erhaltenen Wasserstoffperoxids (H₂O₂) aus der Arbeitslösung (WS), vorzugsweise durch Extraktion mit entmineralisiertem Wasser;
- die Regeneration der Arbeitslösung (WS), wobei die Regeneration das Waschen der Arbeitslösung (WS) durch eine wässrige alkalische Salzlösung (L) umfasst;
- das Rezyklieren der regenerierten Arbeitslösung (WS) zur Durchführung der katalytischen Hydrierung von (einem) gelösten Anthrachinonderivat (en) ;
**dadurch gekennzeichnet, dass** die wässrige alkalische Salzlösung (L), die zum Waschen der Arbeitslösung (WS) eingesetzt wird, eine wässrige alkalische Natriumnitrat- (NaNO₃-) Lösung ist.

2. Verfahren nach Anspruch 1, **dadurch gekennzeichnet, dass** der pH der wässrigen alkalischen Natriumnitrat- (NaNO₃-) Lösung 10 und 14 beträgt.

3. Verfahren nach einem der Ansprüche 1 oder 2, **dadurch gekennzeichnet, dass** der pH der wässrigen alkalischen Natriumnitrat- (NaNO₃-) Lösung mittels Natriumhydroxid (NaOH) eingestellt wird.

4. Verfahren nach einem der Ansprüche 1 bis 3, **dadurch gekennzeichnet, dass** die wässrige alkalische Natriumnitrat- (Na-NO₃-) Lösung 25 bis 50 Gew% Natriumnitrat (NaNO₃) umfasst.

5. Verfahren nach einem der Ansprüche 1 bis 4, **dadurch gekennzeichnet, dass** das Waschen der Arbeitslösung (WS) mit einer wässrigen alkalischen Matriumnitrat- (NaNO₃-) Lösung bei einer Temperatur von 20 bis 40°C durchgeführt wird.

6. Verfahren nach einem der Ansprüche 1 bis 5, **dadurch gekennzeichnet, dass** das Waschen der Arbeitslösung (WS) mit einer 40 Gew%igen wässrigen Natriumnitrat- (NaNO₃-) Lösung durchgeführt wird, die eine ausreichende Menge Natriumhydroxid (NaOH) umfasst, so dass sie einen pH von 11 hat.

7. Verfahren nach einem der Ansprüche 1 bis 6, **dadurch gekennzeichnet, dass** die Regeneration der Arbeitslösung (WS) nach ihrem Waschen mit der wässrigen alkalischen Natriuamitrat-(NaNO₃-) Lösung das Hindurchleiten durch ein Adsorptionsbett aus aktiviertem Aluminiumoxid (12) umfasst.

8. Verfahren nach einem der Ansprüche 1 bis 7, **dadurch gekennzeichnet, dass** das Waschen der Arbeitslösung (WS) durch die wässrige alkalische Natriumnitrat- (NaNO₃-) Lösung mit dem Rezyklieren der wässrigen alkalischen Natriumnitrat- (NaNO₃-) Lösung durchgeführt wird, wobei eine Spülung auf der Rezyklierungsschleife vorgesehen ist.

9. Verfahren nach Anspruch 8, **dadurch gekennzeichnet, dass** die Konzentration an Natriumnitrat (NaNO₃) der wässrigen alkalischen Salzwaschlösung (L) ganz konstant gehalten wird, indem das während dem Waschen zurückgehaltene Wasser in der Rezyklierungsschleife beseitigt wird, wobei die Beseitigung vorteilhafterweise mittels Verdampfen erfolgt.

10. Verfahren nach einem der Ansprüche 8 oder 9, **dadurch gekennzeichnet, dass** auf der Höhe mindestens eines Wärmeaustauschers (22), der sich in der Rezyklierungsschleife befindet, Kälteeinheiten aus der Waschlösung, die zum Waschen diente, abgezogen werden, um die Waschlösung abzukühlen, die zur Durchführung des Waschens dient.
